# EUROPEAN PATENT SPECIFICATION

(11) **EP 1 871 663 B1**
(45) Date of publication and mention of the grant of the patent: **03.06.2009**
(21) Application number: 06724040.8
(22) Date of filing: 05.04.2006
(51) Int. Cl.: B64C 23/06

(54) **SYSTEM AND METHOD FOR REDUCING AIRFOIL VORTICES**
SYSTEM UND VERFAHREN ZUR REDUZIERUNG VON TRAGFLÄCHENWIRBELN
SYSTEME ET PROCEDE POUR LA REDUCTION DE TOURBILLONS DE SURFACE PORTANTE

(30) Priority: 18.04.2005 DE 102005017825; 18.04.2005 US 672444 P
(43) Date of publication of application: 02.01.2008
(73) Proprietor: Airbus Deutschland GmbH, 21129 Hamburg (DE)
(72) Inventor: MAY, Peter, 28307 Bremen (DE)
(74) Representative: Kopf, Korbinian Paul
(86) International application number: PCT/EP2006/003091
(87) International publication number: WO 2006/111272

(56) References cited:
- WO-A-20/04002823
- DE-A1- 2 149 956
- US-A- 2 846 165
- US-A- 4 714 215
- US-A- 6 042 059
- US-A1- 2002 066 831
- US-A1- 2004 155 157

## Description

### Reference to related applications

This application claims the benefit of the filing date of German Patent Application No. 10 2005 017 825.1 filed April 18, 2005 and of United States Provisional Patent Application No. 60/672,444 filed April 18, 2005.

### Field of the invention

The invention relates to a system and a method for reducing airfoil vortices, in particular for reducing airfoil vortices that are generated on the wings of an aircraft, which vortices may make a significant contribution to the wake turbulence of the aircraft.

### Technological Background

Wake turbulence occurs when the lift necessary for flying is generated. In a wing which generates lift, the pressure on the underside exceeds the pressure on its top. Consequently, at the ends of the wing, air flows from the underside to the top, as a result of which a strong vortex is generated, namely the so called "airfoil vortex". Furthermore, at the trailing edge of the wing the fluid layers coming from the top and from the underside flow past each other in different directions so that a free shear layer arises, which in the direction of the wing span is connected to the respective airfoil vortex. This free shear layer together with the respective airfoil vortex rolls itself into two individual vortices that may rotate in opposite directions in the manner of small horizontal tornados which, depending on the size of the aircraft, at their centres can reach top speeds of up to 360 km/h.

Wake turbulence is evident for the equivalent of several hundred wingspans downstream before it decays. This means that in the case of large aircraft such wake turbulence can have a life of several minutes and a length of up to 30 km.

This could have grave consequences in particular for a small aircraft that flies into wake turbulence; for example severe local fluctuations in aerodynamic forces could lead all the way to loss of a stable flight position.

For this reason, aircraft should have to maintain a corresponding distance to each other, in particular during takeoff and landing. The airfoil vortices generated by the wing, which vortices result from the continuous rolling action, thus endanger aircraft that follow, and are a limiting factor in determining takeoff and landing frequencies.

US 6,042,059 discloses a system and a method of vortex wake control using vortex leveraging. Small wings are mounted vertically on the primary wing forward of the trailing edge of the wing and near the positions from which inboard vortices are trailed.

### Summary of the invention

Amongst other things, it may be an object of the present invention to create a system (claim 1) and a corresponding method (claim 5) for reducing airfoil vortices that arise from the continuous rolling action, and thus for reducing the wake decay time in the case of aircraft.

This object may be met as set out in the independent claims. Further exemplary embodiments of the invention are stated in the subordinate claims.

The system according to the invention comprises a component at the extremity of a wing of an aircraft, which component, in order to disturb the rolling action of the air in the region of the outer wing, can periodically be hinged on an axis that extends so as to be essentially perpendicular to the direction of flight. This rolling action of the air may result from the airflow that is in contact with the wing and from the resulting difference in pressure between the top of the wing and the underside of the wing.

The system according to the present invention can be integrated in existing components, wherein independent solutions are also imaginable. Alternatively, the system according to the invention can be combined with existing components. In the subsequent descriptions and the enclosed figures of the embodiments, these components are referred to as "winglets" or "wing tip fences". Today, these aerodynamically effective components that are integrated in the extremities of the wings form part of almost all larger commercial aircraft.

According to another exemplary embodiment of the invention the periodically hingeable component is located on the top of the wing and comprises a fixed element and a first and a second hingeable wing element. The first and the second hingeable wing element are for example arranged side-by-side downstream of the fixed element, and can be folded out relative to each other. According to this improvement of the invention, especially the hingeable wing elements in their folded-out positions can periodically be hinged to and fro relative to the axis that extends so as to be essentially perpendicular in relation to the direction of flight, wherein a relative position of the wing elements in relation to each other is constant, or according to one alternative is changed during the hingeing procedure.

According to another embodiment of the invention the component comprises a movable first wing element on the top of the wing and a movable second wing element on the underside of the wing. The first wing element and the second wing element are preferably facing each other in the region of the outer wing.

According to the both embodiments of the invention, as described in the preceding paragraphs above, the wing elements can be controlled into a first position in which the wing elements extend essentially parallel in relation to the direction of flight, and into a second position in which the first wing element is folded outward (away from the fuselage) at a first predetermined deflection angle in relation to the direction of flight, and the second wing element is folded inward (towards the fuselage) at a second predetermined deflection angle to the direction of flight. In this way the coefficient of resistance of the aircraft is increased by a predetermined value (depending on the configuration, while keeping the lift quasi constant). Without readjusting thrust, in this way a steeper descent or dive (glide path) is thus initiated.

For controlled interference with the rolling action of the air in the region of the outer wing, in the second position the wing elements are periodically moved to and fro at a predetermined speed between an outer end position and an inner end position. The speed can for example be constant or it can change.

During the periodic hingeing action the first and the second deflection angle of the wing elements are such that the coefficient of resistance of the airfoil remains constant, as a result of which there is no negative effect on passenger comfort because no changes in thrust occur.

According to the invention, for example in the landing phase, the first and second wing elements may be controlled from a first position in which the wing elements are folded together and in which the first and second deflection angles are zero, to a second position, in which the first wing element at a first predetermined deflection angle is folded outward, and the second wing element at a second predetermined angle relative to the axis that extends in the direction of flight is folded inward. Subsequently, in a second step the wing elements that are folded out in this way can be moved periodically to and fro (in the direction of flight) between a first end position and a second end position, on an axis which is essentially perpendicular in relation to the direction of flight, wherein during the hingeing movement the first and the second deflection angle are controlled such that a coefficient of resistance of the wing remains constant. In this way the airfoil vortices are disturbed, and the wake turbulence of the aircraft is thus reduced.

According to the invention it is thus possible to shorten the so-called disturbance time of an aircraft, which disturbance time is determined by its wake and the decay time of said wake. The term "disturbance time" of an aircraft refers to the minimum waiting time between takeoff and landing of an aircraft until the permitted safe takeoff or landing of a following aircraft. Depending on the intensity and extent or elongation of the wake, different decay times result, according to which an aircraft is then classified into disturbance classes.

According to the invention an increase in capacity of airports can be achieved without additional takeoff and landing runways by reducing the disturbance times of the aircraft among each other by means of the system and the method according to the invention.

### Short description of the drawings

Below, exemplary embodiments of the invention are described with reference to enclosed drawings. In the drawings:
- Fig. 1: shows a diagrammatic perspective partial view of an aircraft with a system according to a first embodiment of the invention;
- Fig. 2a - 2d: show diagrammatic top views of the system according to the first embodiment of the invention in various states;
- Fig. 3: shows a diagrammatic perspective partial view of a wing with a system according to a second embodiment of the invention; and
- Fig. 3a-3d: show diagrammatic top views of the system according to the second embodiment of the invention in various states.

Below, the same reference characters are used for identical components in the various views of the figures.

### Detailed description of exemplary embodiments

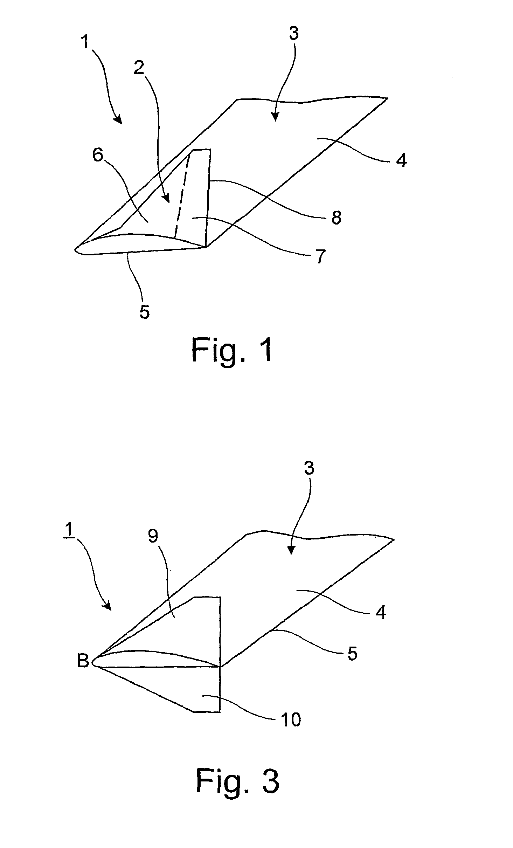

Fig. 1 shows a diagrammatic perspective partial view of a system 1 according to a first embodiment.

System 1 comprises a component 2 which is arranged on the outermost edge region of a wing 3 of an aircraft (not shown).

As shown in Fig. 1, according to the first embodiment of the invention the component 2 is arranged on the top 4 of a wing in order to disturb an airstream that flows from the underside 5 of the wing to the top 4 of the wing (rolling action).

The component 2 according to the first embodiment comprises a fixed element 6, a first wing element 7 and a second wing element 8. In Fig. 1 the second wing element 8 is behind the first wing element 7 and is covered up by said wing element 7.

The first and the second wing element 7, 8 are arranged downstream of the fixed element 6 and are hingeably attached to the fixed element 6 on an axis which extends so as to be essentially perpendicular to the direction of flight. In Fig. 1 the hingeing axis is shown in a dashed line. The fixed element 6 and the wing elements 7, 8 preferably extend in the direction of flight and are designed to be correspondingly aerodynamic.

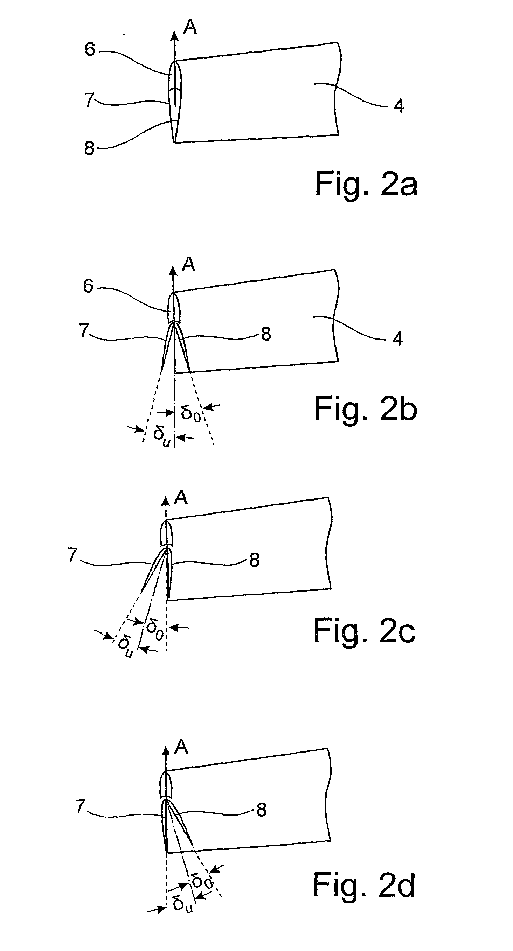

Fig. 2a shows a top view of the system 1 according to Fig. 2 in a first state.

In this first state the first wing element 7 and the second wing element 8 are folded together, with their respective inner surfaces facing each other and preferably contacting each other lightly. The state 1 of the wing elements 7, 8 is for example present during normal flight. In this state, which is also referred to as the home position, the coefficient of resistance and the coefficient of lift are essentially at an aircraft-specific constant value.

As shown in Fig. 2a the fixed element 6 and the folded wing elements 7, 8 essentially extend in the direction of flight A, thus forming an aerodynamic unit.

Fig. 2b shows a second state of the wing elements 7, 8. This second state exists for example at the beginning of the approach to land. In order to control the wing elements 7, 8 so that it assumes this second state it is for example possible to use the central control system of the aircraft.

As shown in Fig. 2b the first wing element 7 is deflected by an angle δᵤ towards the outside, away from the fuselage (not shown). The second wing element 8 is deflected by an angle δₒ towards the inside towards the fuselage (not shown). The angles δᵤ, δₒ are relative in relation to the flight direction axis A. In this second state the coefficient of resistance increases while the coefficient of lift remains the same. As a consequence of the angle deflection δᵤ and δₒ of the wing elements 7, 8 a constant change in the wing wake occurs.

The size of the angle deflections δᵤ and δₒ is aircraft-specific, with optimal values for example being determined in the wind tunnel.

Fig. 2c shows a third state of the wing elements 7, 8, in which, from their middle position shown in Fig 2b, the wing elements 7, 8, while maintaining their relative positions in relation to each other, are hinged outward into an outer end position. According to Fig. 2c the outer end position of the hingeing process is reached when the second wing element 8 essentially extends parallel to the flight direction axis A. The rotary movement of the wing elements 7, 8 into this outer end position takes place at a predetermined rotary speed. Control of this rotary movement can for example be assumed by the central aircraft control system.

At the outer end position, as shown in Fig. 2c, the direction of rotation of the movement is changed and the wing elements 7, 8 are rotated to an inner end position, as shown in Fig. 2d. At this point the direction of rotation changes again and a new cycle commences.

During the movement sequence described above, from end position to end position, the deflection angles δᵤ, δₒ of the wing elements 7, 8 are preferably controlled such that the coefficient of resistance remains constant. As a result of this periodic movement sequence of the wing elements 7, 8 the continuous rolling action of the air in the region of the outer wing is disturbed, which leads to a reduction of the wake turbulence generated.

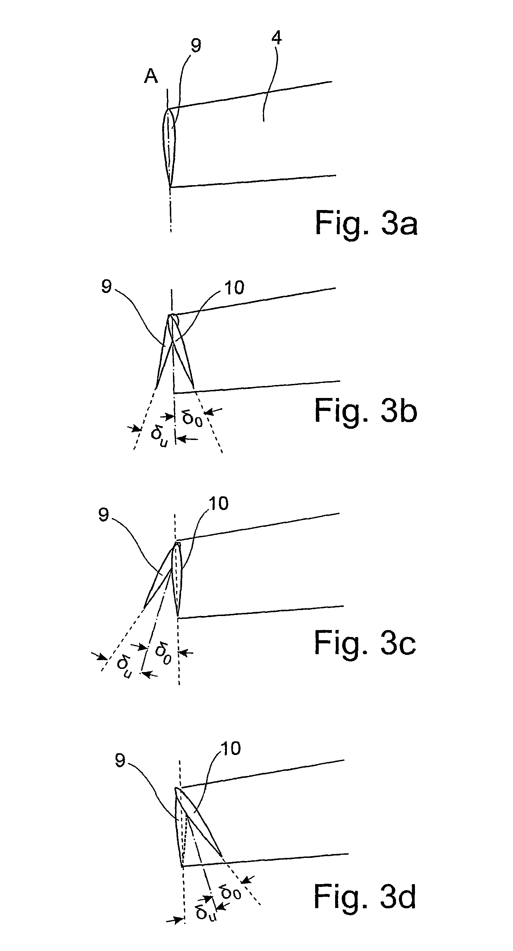

Fig. 3 shows a second embodiment of the system 1 according to the invention in an arrangement as a so-called wing-tip fence.

According to this embodiment the system 1 according to the invention comprises a first wing element 9 and a second wing element 10, which are arranged on the outer extremity of an airfoil 3 of an aircraft (not shown). In particular, the first wing element 9 is arranged on the top 4 of the wing, while the second wing element 10 is arranged on the underside 5 of the wing. In a hinge point B, the wing elements 9, 10 are hingeable essentially perpendicular in relation to the direction of flight, as shown in Fig. 3a - 3d.

Fig. 3a - 3d provides top views of the top 4 of the wing of the system 1 shown in Fig. 3. As shown in Fig. 3a, in a way that is similar to the situation in the first embodiment, in a first state the wing elements 9, 10 are in a home position in which the wing elements 9, 10 are not deflected inward or outward relative to the flight direction axis A. In Fig. 3a the top view only shows the wing element 9, while the wing element 10 that is situated underneath it in the figure is covered up.

Fig. 3b shows the wing elements 9, 10, deflected by the deflection angle δᵤ, δₒ, in a way that is similar to the situation in the first embodiment.

Fig. 3c shows a third state, in which the wing elements 9, 10 are hinged outward while maintaining their relative positions in relation to each other, in a way that is similar to the situation in the first embodiment.

Fig. 3d shows the wing elements 9, 10 in a fourth state, in which they are hinged inwards. The aerodynamic processes in the states 1 to 4, as shown in Fig. 3a - 3d, correspond to those according to the first embodiment, and are therefore not described again.

Although the invention has been described with reference to preferred embodiments, it goes without saying that the person skilled in the art can make changes in this field without leaving the scope of protection of the invention.

For example, more than two wing elements can be used and, while maintaining a predetermined relative position in relation to each other, can periodically be hinged at different speeds on a flight direction axis. Although according to the preferred embodiments it has in part been described that the states 3 and 4 are taken up while maintaining the relative positions of the wing elements, it is of course possible for the relative positions of the wing elements in relation to each other to change during the periodic rotary movement. A practically constant coefficient of resistance during the periodic rotary movement is a given requirement to the extent that passengers of the aircraft are not exposed to any noticeable acceleration forces or deceleration forces.

In addition it should be pointed out that "comprising" does not exclude other elements or steps, and "a" or "one" does not exclude a plural number. Furthermore, it should be pointed out that characteristics or steps which have been described with reference to one of the above embodiments can also be used in combination with other characteristics or steps of other embodiments described above. Reference characters in the claims are not to be interpreted as limitations.

### Reference List

- 1: System
- 2: Component
- 3: Airfoil or wing
- 4: Top of the wing
- 5: Bottom of the wing
- 6: Fixed element
- 7: First wing element
- 8: Second wing element
- 9: First wing element
- 10: Second wing element
- A: Flight direction axis
- B: Hinge point

## Claims

1. A system for reducing wake turbulence of an aircraft, comprising a component (6, 7, 8, 9,10) that can be attached to the extremity of a wing of the aircraft (3), **characterised in that**
the component, in order to disturb the rolling action of the air in the region of the outer wing, can periodically be hinged about an axis perpendicular to the direction of flight (A);
**characterized in that** the component is located on the top of the wing (4) and comprises a fixed element (6) and a first and a second hingeable wing element (7, 8), which wing elements are arranged side-by-side downstream of the fixed element (6), and can be folded out relative to each other in the direction of flight (A), respectively away from and towards the fuselage.

2. The system of claim 1, wherein the wing elements (7, 8, 9, 10) in a first position extend so as to be essentially parallel to the direction of flight, and in a second position the first wing element (7, 9) is folded outward at a first predetermined deflection angle (δᵤ) in relation to the flight direction axis (A), and the second wing element (8, 10) is folded inward at a second predetermined deflection angle (δₒ) in relation to the flight direction axis (A).

3. The system of claim 2, wherein in order to disturb the rolling action of the air in the region of the outer wing, in the second position the wing elements (7, 8; 9, 10) are periodically hingeable to and from at a predetermined speed between an outer end position and an inner end position.

4. The system of claim 3, wherein during the periodic hingeing action, the first and the second deflection angle (δᵤ, δₒ) are such that the coefficient of resistance of the airfoil (3) remains constant.

5. A method for reducing the wake turbulence of an aircraft with the system according to any one of claims 1 to 4, comprising the steps of:
controlling the first and the second wing element (7, 8; 9, 10) from a first position, in which the wing elements are folded together and extend essentially parallel in relation to an axis (A) that extends in the direction of flight, into a second position, in which the first wing element (7; 9) is folded outward at a first predetermined deflection angle (δᵤ), and the second wing element (8; 10) is folded inward at a second predetermined deflection angle (δₒ) in relation to the axis (A) extending in the direction of flight; and
periodic hingeing of the wing elements (7, 8; 9, 10) in the second position between a first end position and a second end position, wherein during the hingeing movement the first and the second deflection angle (δᵤ, δₒ) are controlled such that the coefficient of resistance of the airfoil (3) remains constant.

## Patentansprüche

1. System zur Reduzierung von Wirbelschleppen eines Luftfahrzeugs, enthaltend ein an einem äußeren Ende eines Flügels (3) des Luftfahrzeugs anbringbares Bauteil (6, 7, 8; 9, 10), **dadurch gekennzeichnet, dass**
das Bauteil zur Störung eines Aufrollvorgangs der Luft im Bereich des Außenflügels periodisch um eine Achse senkrecht zur Flugrichtung (A) schwenkbar ist;
**dadurch gekennzeichnet, dass**
das Bauteil auf der Flügeloberseite (4) ist und ein festes Element (6) und ein erstes und ein zweites schwenkbares Flügelelement (7, 8) enthält, die nebeneinander stromabwärts von dem feststehenden Element (6) angeordnet und in Flugrichtung (A) relativ zueinander, jeweils weg von und auf den Rumpf zu aufklappbar sind.

2. System nach Anspruch 1, wobei die Flügelelemente (7, 8; 9, 10) in einer ersten Stellung im Wesentlichen parallel zur Flugrichtung verlaufen, und in einer zweiten Stellung das erste Flügelelement (7, 9) unter einem ersten vorbestimmten Ausschlagwinkel (δᵤ) zur Flugrichtungsachse (A) nach außen und das zweite Flügelelement (8, 10) unter einem zweiten vorbestimmten Ausschlagwinkel (δₒ) zur Flugrichtungsachse (A) nach innen geklappt sind.

3. System nach Anspruch 2, wobei zur Störung des Aufrollvorgangs der Luft im Bereich des Außenflügels die Flügelelemente (7, 8; 9, 10) in der zweiten Stellung periodisch mit einer vorbestimmten Geschwindigkeit zwischen einer äußeren Endposition und einer inneren Endposition hin und her schwenkbar sind.

4. System nach Anspruch 3, wobei während des periodischen Schwenkvorgangs der erste und der zweite Ausschlagwinkel (δᵤ, δₒ) derart sind, dass der Widerstandsbeiwert des Flügels (3) konstant bleibt.

5. Verfahren zum Reduzieren von Wirbelschleppen eines Luftfahrzeugs mit dem System gemäß einem der Ansprüche 1 bis 4, mit den Schritten
Steuern des ersten und des zweiten Flügelelements (7, 8; 9, 10) von einer ersten Stellung, in der die Flügelelemente zusammengeklappt und im Wesentlichen parallel zu einer in Flugrichtung verlaufenden Achse (A) sind, in eine zweite Stellung, in der das erste Flügelelement (7; 9) unter einem ersten vorbestimmten Ausschlagwinkel (δᵤ) nach außen und das zweite Flügelelement (8; 10) unter einem zweiten vorbestimmten Ausschlagwinkel (δₒ) relativ zu der in Flugrichtung verlaufenden Achse (A) nach innen geklappt ist; und
periodisches Schwenken der Flügelelemente (7, 8; 9, 10) in der zweiten Stellung zwischen einer ersten Endposition und einer zweiten Endposition, wobei während der Schwenkbewegung der erste und der zweite Ausschlagwinkel (δᵤ, δₒ) derart gesteuert werden, dass der Widerstandsbeiwert des Flügels (3) konstant bleibt.

## Revendications

1. Système pour réduire la turbulence de sillage d'un avion, comportant un composant (6, 7, 8, 9, 10) qui peut être fixé à l'extrémité d'une aile de l'avion (3),
**caractérisé en ce que** le composant, afin de perturber l'action de roulis de l'air dans la région de l'aile extérieure, peut pivoter périodiquement autour d'un axe perpendiculaire à la direction de vol (A),
**caractérisé en ce que** le composant est positionné sur le dessus de l'aile (4) et comporte un élément fixe (6) et un premier et un second éléments d'aile pouvant pivoter (7, 8), lesquels éléments d'aile sont agencés côte à côte en aval de l'élément fixe (6), et peuvent être dépliés l'un par rapport à l'autre dans la direction de vol (A), respectivement en s'éloignant et en se rapprochant du fuselage.

2. Système selon la revendication 1, dans lequel les éléments d'aile (7, 8, 9, 10), dans une première position, s'étendent de manière à être sensiblement parallèles à la direction de vol et, dans une seconde position, le premier élément d'aile (7, 9) est déplié vers l'extérieur à un premier angle de déviation prédéterminé (δᵤ) par rapport à l'axe de direction de vol (A), et le second élément d'aile (8, 10) est replié vers l'intérieur à un second angle de déviation prédéterminé (δₒ) par rapport à l'axe de direction de vol (A).

3. Système selon la revendication 2, dans lequel afin de perturber l'action de roulis de l'air dans la région de l'aile extérieure, dans la seconde position, les éléments d'aile (7, 8 ; 9, 10) peuvent pivoter périodiquement en va-et-vient, à une vitesse prédéterminée, entre une position d'extrémité extérieure et une position d'extrémité intérieure.

4. Système selon la revendication 3, dans lequel, pendant l'action de pivotement périodique, le premier et le second angles de déviation (δᵤ, δₒ) sont tels que le coefficient de résistance de la surface portante (3) reste constant.

5. Procédé pour réduire la turbulence de sillage d'un avion à l'aide du système selon l'une quelconque des revendications 1 à 4, comportant les étapes consistant à :
commander le premier et le second éléments d'aile (7, 8 ; 9, 10) depuis une première position, dans laquelle les éléments d'aile sont conjointement repliés et s'étendent sensiblement parallèles par rapport à un axe (A) qui s'étend dans la direction de vol, vers une seconde position, dans laquelle le premier élément d'aile (7 ; 9) est déplié vers l'extérieur à un premier angle de déviation prédéterminé (δᵤ), et le second élément d'aile (8 ; 10) est replié vers l'intérieur à un second angle de déviation prédéterminé (δₒ) par rapport à l'axe (A) s'étendant dans la direction de vol, et
faire pivoter périodiquement les éléments d'aile (7, 8 ; 9, 10) dans la seconde position entre une première position d'extrémité et une seconde position d'extrémité, dans lequel, pendant le mouvement de pivotement, le premier et le second angles de déviation (δᵤ, δₒ) sont commandés de sorte que le coefficient de résistance de la surface portante (3) reste constant.
